# EUROPÄISCHE PATENTSCHRIFT

(11) **EP 1 418 087 B1**
(45) Veröffentlichungstag und Bekanntmachung des Hinweises auf die Patenterteilung: **06.09.2006**
(21) Anmeldenummer: 03103868.0
(22) Anmeldetag: 20.10.2003
(51) Int. Cl.: B60Q 1/00, F21S 8/12

(54) **Scheinwerfer für Fahrzeuge**
Headlamps for vehicles
Phare pour véhicules

(30) Priorität: 07.11.2002 DE 10251812
(43) Veröffentlichungstag der Anmeldung: 12.05.2004
(73) Patentinhaber: Hella KGaA Hueck & Co., 59552 Lippstadt (DE)
(72) Erfinder: Hack, Michael, 33106, Paderborn (DE); Haase, Christian, 59757, Arnsberg (DE); Gorczyca, Christian, 59555, Lippstadt (DE)

(56) Entgegenhaltungen:
- EP-A- 1 243 467
- EP-A- 1 265 024
- US-B1- 6 471 368

## Beschreibung

Die Erfindung betrifft einen Scheinwerfer für Fahrzeuge mit mindestens einem im Inneren des Scheinwerfers angeordneten Lichtelement, mit einem Abdeckelement, das von der Vorderseite des Scheinwerfers her gesehen eine Lichtaustrittsöffnung des Lichtelements umgibt, mit einem ringförmigen Lichtleitelement, das an Vorderseite des Abdeckelements angeordnet ist, zur Lichtaustrittsöffnung benachbart verläuft und eine Lichteinkoppelfläche aufweist, und mit einer der Lichteinkoppelfläche zugeordneten Lichtquelle.

Ein solcher Scheinwerfer für Fahrzeuge ist aus der DE - A - 101 14 123 bekannt. Ein ringförmiges Lichtleitelement für Positionslicht umgibt einen schalenförmigen Reflektor für Fernlicht, während ein anderes ringförmiges Lichtleitelement eine Linse eines Projektionsmoduls für Abblendlicht umgibt. Die ringförmigen Lichtleitelemente sind nach oben hin geöffnet und weisen jeweils zwei von langen flexiblen Lichtleitern gebildete Lichteinkoppelelement auf. Die flexiblen Lichtleiter führen zu einer Lichtquelle, die von einem im hinteren Bereich des Scheinwerfers angeordneten Lichtmodul mit einer Glühlampe gebildet ist. Ein solcher Aufbau ist kostenintensiv in der Herstellung und umständlich und zeitaufwendig in der Montage. Weiterhin entstehen wegen den flexiblen Lichtleitern zusätzliche Lichtverluste.

Aufgabe der Erfindung ist es, den im Oberbegriff des Anspruchs 1 beschriebenen Scheinwerfer für Fahrzeuge derart zu verbessern, dass die zur Lichteinkopplung in das ringförmige Lichtleitelement notwendigen Bauteile zusammen kompakt bauen können und eine hohe Lichtausbeute der Lichtquelle möglich ist. Diese Aufgabe wird nach der Erfindung dadurch gelöst, dass ein Halter für die Lichtquelle an der Rückseite des Abdeckelements und/oder des Lichtelements angeordnet ist, die Lichtquelle und die Lichteinkoppelfläche des Lichtleitelements einer Öffnung des Abdeckelements und/oder des Lichtelements zugeordnet sind und das Abdeckelement und/oder das Lichtelement ein Fixierungselement für die Lichtquelle und die der Lichtquelle benachbarte Lichteinkoppelfläche des Lichtleitelements ist. Dadurch sind nach einer Montage des Halters und des ringförmigen Lichtleitelements die Lichtquelle und die Lichtei n-koppelstelle des Lichtleitringes zueinander ausgerichtet. Weiterhin ist der Halter hinter dem Abdeckelement versteckt angeordnet und bei der Montage des Scheinwerfers ist das Abdeckelement und/oder das Lichtelement zusammen mit der Lichtquelle, dem Halter der Lichtquelle und dem Lichtleitelement einfach und schnell in den Scheinwerfer einsetzbar.

Die Montage ist einfach und schnell durchführbar, wenn an die Rückseite des ringförmigen Lichtleitelements mehrere Rastzungen angeformt sind, die in Rastelemente des Abdeckelements und/oder des Lichtelements eingreifen und das Lichtleitelement in Aufsetzrichtung an dem Abdeckelement und/oder dem Lichtelement fixieren, wobei mindestens eine Rastzunge sich in Einsetzrichtung verjüngt und mit den die Verjüngung bildenden Seiten das ringförmig Lichtleitelement in seiner Umfangsrichtung fixiert. In diesem Zusammenhang ist es vorteilhaft, wenn das ringförmige Lichtleitelement mit einer seiner Außenseite an eine umlaufende Schulter des Abdeckelements und/oder des Lichtelements angrenzt. Dadurch ist das ringförmige Lichtleitelement radial fixiert. Weiterhin sind von der Vorderseite des Scheinwerfers her die das Lichtleitelement an dem Abdeckelement und/oder dem Lichtelement haltenden Fixierungselemente durch das Lichtleitelement abgedeckt.

Weiterhin ist es vorteilhaft, wenn an die Rückseite des Abdeckelements und/oder des Lichtelements mehrere Befestigungsansätze zur Fixierung des Halters an dem Abdeckelement anformt sind. Die Befestigungsansätze sind versteckt hinter dem Abdeckelement angeordnet und der Halter ist sicher an dem Abdeckelement und/oder dem Lichtelement festsetzbar.

Weiterhin besteht ein besonderer Vorteil, wenn die für die Lichteinkoppelfläche und die Lichtquelle zugeordnete Öffnung des Abdeckelement und/oder des Lichtelements im unteren Bereich des ringförmigen Lichtleitelements angeordnet ist und von der Vorderseite des Scheinwerfers her gesehen von einer Ka p-pe abgedeckt ist, die an dem Lichtleitelement durch Laserschweißstellen gehalten ist. Dadurch ist die Kappe verliersicher an dem Lichtleitelement gehalten und durch das als Fixierelement dienende Abdeckelement zur der Lichtquelle zugeordneten Öffnung des Abdeckelements ausgerichtet. Die Kappe kann aus lichtundurchlässigen Material hergestellt sein und an ihrer äußeren Oberfläche kann ein Emblem angebracht sein. Da die Lichtquelle in dem kühlsten Bereich des ringförmigen Lichtleitelements angeordnet ist erhöht sich ihre Lebensdauer.

Der besondere Vorteil der Erfindung besteht darin, wenn die Lichtquelle eine Leuchtdiode und der Halter ein Kühlkörper für die Leuchtdiode ist. Bei der Benutzung einer LED ist der gesamte Lichtkegel in das Lichtleitelement einkoppelbar und somit ist umlaufend eine besonders helle Ausleuchtung des ringförmigen Lichtleitelements möglich. Weiterhin ist zur Wärmeableitung kein zusätzliches Bauteil notwendig.

Nach einer Weiterbildung der Erfindung verläuft die Längsachse der LED ausgehend von dem Halter schräg nach oben. Dadurch benötigt der Halter bei einer zu dem Halter benachbarten schräg verlaufenden Außenwand eines Scheinwerfergehäuses nur wenig Bauraum.

Weiterhin ist es vorteilhaft, wenn das Lichtleitelement mit seiner Rückseite unter Vorspannung an zwischen den Rastelementen angeordneten Erhebungen des Abdeckelements und/oder des Lichtelements anliegt. Dadurch verspannt sich das Lichtleitelement zwischen den Rastelementen und den Erhebungen.

Bei einer besonders vorteilhaften Weiterbildung der Erfindung sind die Rastzungen am äußeren oder inneren rückwärtigen Randbereich der Lichtleitelemente und außerhalb von einem optischen Reflexionsbereich des Lichtleitelements angeformt. Bei einer kreisringförmigen Ausführung des optischen Reflexionsbereichs in umlaufend eine homogene Ausleuchtung des ringförmigen Lichtleitelements gegeben. Wenn das ringförmige Lichtleitelement einen kreisförmigen Querschnitt aufweist, sind die Rastarme von der Vorderseite des Scheinwerfers her nicht zu sehen.

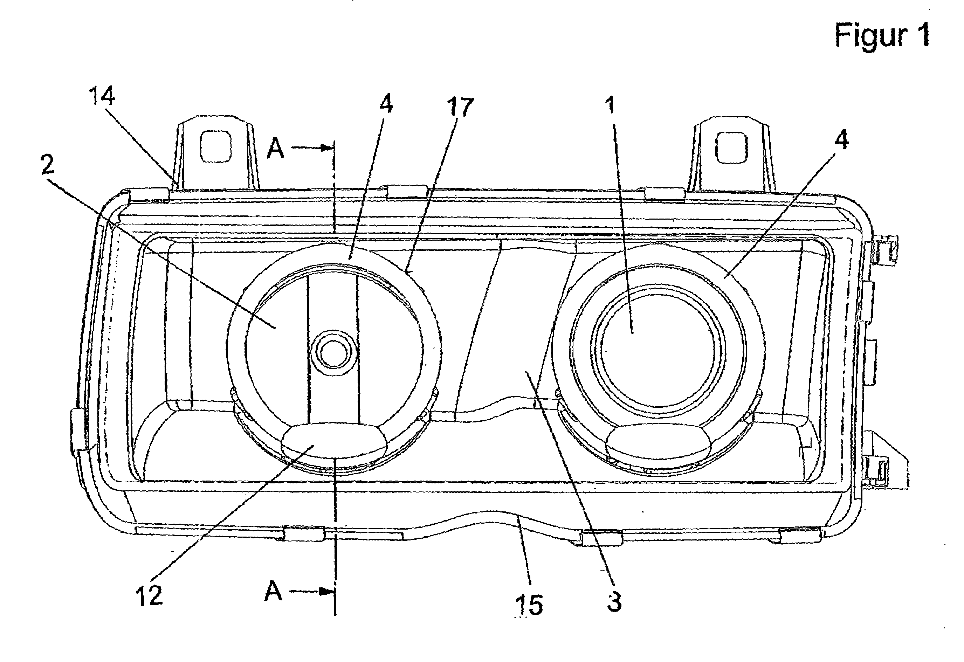

Ein Ausführungsbeispiel nach der Erfindung ist in der Zeichnung dargestellt, und zwar zeigen
Figur 1 in einer Vorderansicht einen Scheinwerfer für Fahrzeuge mit zwei ringförmigen Lichtleitelementen für Positionslicht,

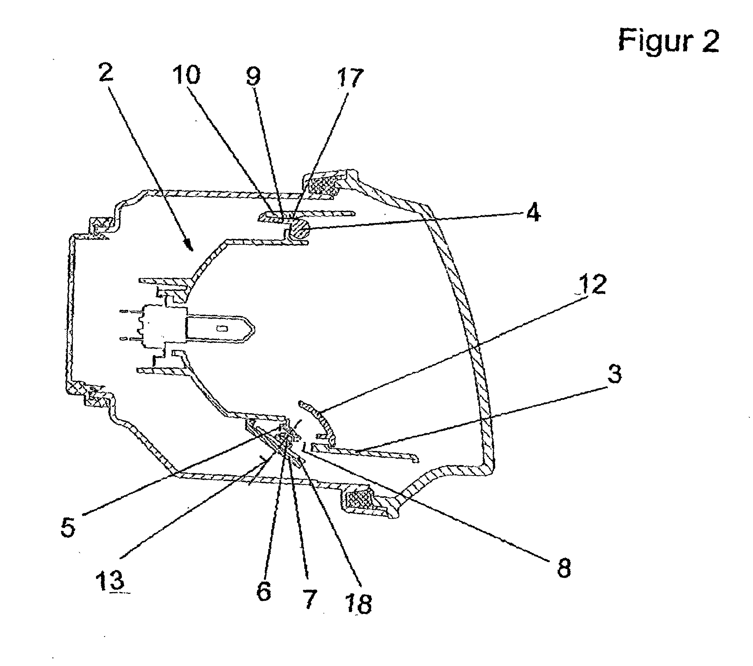

Figur 2 einen Schnitt nach der Linie A - A in Figur 1,

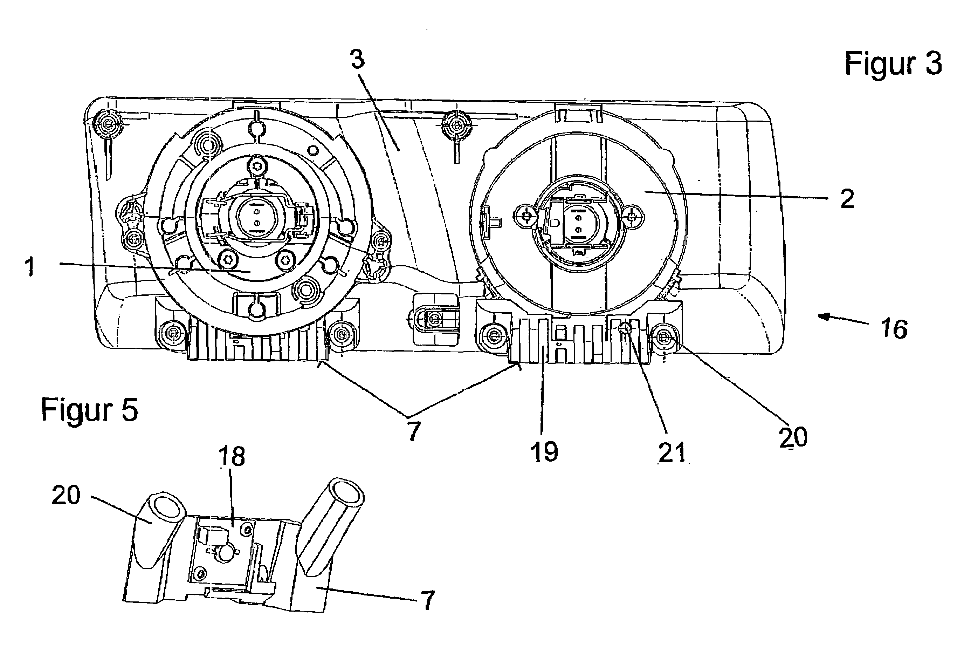

Figur 3 eine Rückansicht des Scheinwerfers mit einem Halter einer Lichtquelle für das Positionslicht,

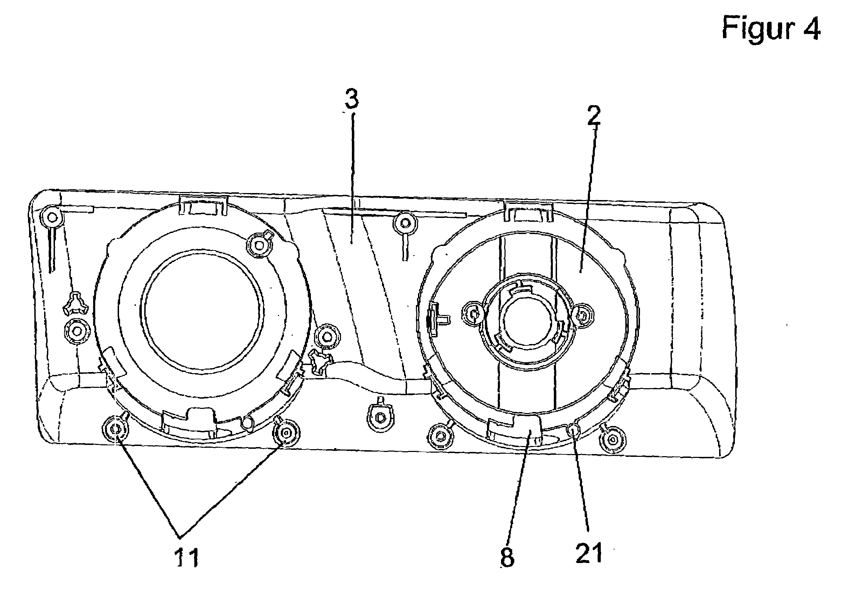

Figur 4 eine Rückansicht auf ein Abdeckelement des Scheinwerfers, das als Fixierelement für die Lichtleitringe und die Halter der Lichtquellen dient und
Figur 5 in einer perspektivischen Ansicht den Halter mit Lichtquelle.

Der Scheinwerfer für Fahrzeuge weist ein topfförmiges Gehäuse 14 und eine die vordere Öffnung des Gehäuses 14 verschließende Abschlussscheibe 15 auf. Im Inneren des Scheinwerfers ist eine Lichteinheit 16 angeordnet. Die Lichteinheit 16 ist um eine vertikale und horizontale Achse verstellbar (nicht dargestellt). Die Lichteinheit 16 besteht aus zwei Lichtelementen 1 und 2 und einem die Lichtelemente 1 und 2 tragenden Abdeckelement 3. Das Abdeckelement 3 deckt den Bereich zwischen den Lichtelementen 1 und 2 und dem vorderen Rand des Gehäuses 14 weitestgehend ab und ist auf seiner Vorderseite mit einer hochglänzenden silberfarbigen Beschichtung versehen. Das Lichtelement 1 besteht aus einem Projektionsmodul für Abblendlicht, dessen Linse von in einer Durchgangsöffnung des Abdeckelements 3 angeordnet ist, während das Lichtelement 2 ein schalenförmigen Reflektor ist der einstückig mit dem Abdeckelement 3 ausgeführt ist. Die Lichtelemente 1 und 2 sind jeweils von einem ringförmigen Lichtleitelement 4 umgeben, die auf der Vorderseite des Abdeckelements 3 angeordnet sind. An die Rückseite der Lichtleitelemente 4 sind jeweils drei Rastzungen 9 angeformt, die mit Rastnasen in Rastelemente 10 des Abdeckelements 3 selbsttätig eingreifen. Die Rastelemente 10 weisen Öffnungen in dem Abdeckelement 3 auf, durch die hindurch die in Aufsetzrichtung der Lichtleitelemente 4 weisende Rastzungen 9 führen. Bei jedem Lichtleitelement 4 verjüngt sich mindestens eine Rastzunge 9 mit schmalen Seitenflächen in Aufsetzrichtung und grenzt mit den schmalen Seitenflächen an ihrer Wurzel an den Rand der Öffnung des Rastelements 10 an. Das ringförmige Lichtleitelement 4 grenzt mit seiner Außenseite an eine kleine umlaufende Schulter 17 des Abdeckelements 3 an. Die Schulter 17 ist von einer Stufe in dem Abdeckelement 3 gebildet. Zwischen den Rastelementen 10 liegt das Lichtleitelement 4 an Erhebungen (nicht dargestellt) des Abdeckelements an. In dem unteren Bereich weisen die ringförmigen Lichtleitelemente 4 ein Lichteinkoppelelement mit einer Lichteinkoppelfläche 5 auf. Die Lichtei n-koppelfläche 5 ist einer Öffnung 8 des Abdeckelements 3 zugeordnet und weist zur Rückseite des Scheinwerfers. An der Rückseite des Abdeckelements 3 ist ein Halter 7 für eine Lichtquelle 6 befestigt. Die Lichtquelle 6 ist von einer Leuchtdiode gebildet, wobei der Halter 7 aus Metall besteht und im Druckgießverfahren hergestellt ist. Eine die Lichtquelle 6 tragende Leiterplatte 18 liegt flächig an dem Halter 7 an. Somit dient der metallische Halter 7 als Kühlkörper für die Lichtquelle 6. Der Halter 7 weist an seiner Rückseite mehrere Kühlrippen 19 auf. Die Längsachse 13 der Lichtquelle 6 verläuft ausgehende von dem Halter 7 schräg nach vorne und oben. Die Rückseite des Halters 7 verläuft etwa senkrecht zur Längsachse 13 der Lichtquelle 6. Somit benötigt der Halter 7 wenig Bauraum. Der Halter 7 weist an zwei sich abgewandten seitlichen Seiten jeweils eine nach vorne weisende Befestigungshülse 20 auf, die auf Befestigungsansätze 11 des Abdeckelements 3 aufgeschoben und durch Befestigungsschrauben an den Befestigungsansätzen 20 gehalten sind. Zusätzlich zu den beiden Befestigungsansätzen 20 ist an das Abdeckelement 3 zwischen den beiden Befestigungsansätzen 20 ein Fixierungsansatz 21 angeformt, der in entsprechende Öffnung des Halters 7, welche nahe seinem hinteren Rand angeordnet ist, eingeschoben ist. Zwischen der Öffnung für den Fixierungsansatz 21 und den Befestigungsansätzen 20 ist die Lichtquelle 6 angeordnet. Dadurch ist der Montage von den Lichtleitelementen 4 und dem Halter 7 die Lichtquelle 6 genau zu der Lichteinkoppelfläche 5 der Lichtleitelemente 4 ausgerichtet. Die zur Aufnahme der Lichteinkoppelfläche 5 und der Lichtquelle 6 dienende Öffnung 8 des Abdeckelements 3 ist durch eine Kappe 12 abgedeckt. Die Kappe 12 ist durch Laserschweißen an den Lichtleitelementen 4 befestigt, aus lichtundurchlässigem Material hergestellt und schirmt die im Bereich der Lichteinkoppelfläche 5 bestehenden störenden Lichtstrahlen ab. Die vordere Seite der Kappe 12 kann ein Emblem aufweisen. An der Rückseite weisen die ringförmigen Lichtleitelemente 4 umlaufend Reflexionselemente (nicht dargestellt) auf, die die Lichtstrahlen nach vorn reflektieren. Angrenzend an die Reflexionselemente sind an den äußeren rückwärtigen Rand der Lichtleitelemente 4 die Rastzungen 9 angeformt.

### Bezugszeichenliste:

- 1.: Lichtelement
- 2.: Lichtelement
- 3.: Abdeckelement
- 4.: Lichtleitelement
- 5.: Lichteinkoppelfläche
- 6.: Lichtquelle
- 7.: Halter
- 8.: Öffnung
- 9.: Rastzunge
- 10.: Rastelement
- 11.: Befestigungsansatz
- 12.: Kappe
- 13.: Längsachse
- 14.: Gehäuse
- 15.: Abschlussscheibe
- 16.: Lichteinheit
- 17.: Schulter
- 18.: Leiterplatte
- 19.: Kühlrippen
- 20.: Befestigungshülse
- 21.: Fixierungsansatz

## Patentansprüche

1. Scheinwerfer für Fahrzeuge mit mindestens einem im Inneren des Scheinwerfers angeordneten Lichtelement (1, 2), mit einem Abdeckelement (3), das von der Vorderseite des Scheinwerfers her gesehen eine Lichtaustrittsöffnung des Lichtelements (1, 2) umgibt, mit einem ringförmigen Lichtleitelement (4), das an Vorderseite des Abdeckelements (3) angeordnet ist, zur Lichtaustrittsöffnung benachbart verläuft und eine Lichteinkoppelfläche (5) aufweist, und mit einer der Lichteinkoppelfläche (5) zugeordneten Lichtquelle (6),
**dadurch gekennzeichnet, dass** ein Halter (7) für die Lichtquelle (6) an der Rückseite des Abdeckelements (3) und/oder des Lichtelements (1 oder 2) angeordnet ist, die Lichtquelle (6) und die Lichteinkoppelfläche (5) des Lichtleitelements (4) einer Öffnung (8) des Abdeckelements (3) und/oder des Lichtelements (1 oder 2) zugeordnet sind und das Abdeckelement (3) und/oder das Lichtelement (1 oder 2) ein Fixierungselement für die Lichtquelle (6) und die der Lichtquelle (6) benachbarte Lichteinkoppelfläche (5) des Lichtleitelements (4) ist.

2. Scheinwerfer nach Anspruch 1, **dadurch gekennzeichnet, dass** an die Rückseite des ringförmigen Lichtleitelements (4) mehrere Rastzungen (9) angeformt sind, die in Rastelemente (10) des Abdeckelements (3) und/oder des Lichtelements (1 oder 2) eingreifen und das Lichtleitelement (4) in Aufsetzrichtung und in Umfangsrichtung an dem Abdeckelement (3) und/oder dem Lichtelement (1 oder 2) fixieren.

3. Scheinwerfer nach Anspruch 2, **dadurch gekennzeichnet, dass** mindestens eine Rastzunge (9) sich in Einsetzrichtung verjüngt und mit den die Verjüngung bildenden Seiten das ringförmige Lichtleitelement (4) in seiner Umfangsrichtung fixiert.

4. Scheinwerfer nach einem der Ansprüche 1 bis 3, **dadurch gekennzeichnet, dass** das ringförmige Lichtleitelement (4) mit seiner Außenseite an eine Schulter (17) des Abdeckelements (3) und/oder des Lichtelements (1 oder 2) angrenzt.

5. Scheinwerfer nach einem der Ansprüche, 1 bis 4, **dadurch gekennzeichnet, dass** an die Rückseite des Abdeckelements (3) und/oder des Lichtelements (1 oder 2) mehrere Befestigungsansätze (11) zur Fixierung des Halters an dem Abdeckelement (3) und/oder dem Lichtelement (1 oder 2) anformt sind.

6. Scheinwerfer nach einem der Ansprüche 1 bis 5, **dadurch gekennzeichnet, dass** die für die Lichteinkoppelfläche (5) und die Lichtquelle (6) zugeordnete Öffnung (8) des Abdeckelements (3) und/oder des Lichtelements (1 oder 2) im unteren Bereich des ringförmigen Lichtleitelements (4) angeordnet ist und von der Vorderseite des Scheinwerfers her gesehen von einer Kappe (12) abgedeckt ist.

7. Scheinwerfer nach Anspruch 6, dass die Kappe (12) an dem Lichtleitelement (4) befestigt ist.

8. Scheinwerfer nach Anspruch 7, **dadurch gekennzeichnet, das** die Kappe (12) durch Laserschweißstellen an dem Lichtleitelement (4) gehalten ist.

9. Scheinwerfer nach einem der Ansprüche 1 bis 8, **dadurch gekennzeichnet, dass** die Lichtquelle (6) eine Leuchtdiode und der Halter (7) ein Kühlkörper für die Leuchtdiode ist.

10. Scheinwerfer nach Anspruch 9, **dadurch gekennzeichnet, dass** die Längsachse (13) der Lichtquelle (6) ausgehend von dem Halter (7) schräg nach vorn und oben verläuft.

11. Scheinwerfer nach einem der Ansprüche 1 bis 10, **dadurch gekenn-zeichnet, dass** das Lichtleitelement (4) mit seiner Rückseite unter Vorspannung an zwischen den Rastelementen (10) angeordneten Erhebungen des Abdeckelements (3) anliegt.

12. Scheinwerfer nach einem der Ansprüche 1 bis 11, **dadurch gekenn-zeichnet, dass** die Rastzungen (9) am äußeren oder inneren rückwärtigen Randbereich der Lichtleitelemente (4) und außerhalb von einem optischen Reflexionsbereich des Lichtleitelements (4) angeformt sind.

## Claims

1. Headlamp for vehicles comprising at least one lighting element (1, 2) arranged in the interior of the headlamp, a cover element (3) which surrounds a light-exit opening of the lighting element (1, 2) as viewed from the front of the headlamp, an annular light-conducting element (4) which is arranged on the front of the cover element (3), extends adjacent to the light-exit opening and has a light-coupling surface (5), and a light source (6) associated with the light-coupling surface (5), **characterised in that** a holder (7) for the light source (6) is arranged on the rear of the cover element (3) and/or the lighting element (1 or 2), the light source (6) and the light-coupling surface (5) of the light-conducting element (4) are associated with an opening (8) of the cover element (3) and/or the lighting element (1 or 2) and the cover element (3) and/or the lighting element (1 or 2) is a fixing element for the light source (6) and the light-coupling surface (5) of the light-conducting element (4) adjacent to the light source (6).

2. Headlamp according to claim 1, **characterised in that** a plurality of snap-in pins (9) which engage in snap-in elements (10) of the cover element (3) and/or the lighting element (1 or 2) and fix the light-conducting element (4) to the cover element (3) and/or the lighting element (1 or 2) in the direction of mounting and in the circumferential direction are moulded on to the rear of the annular light-conducting element (4).

3. Headlamp according to claim 2, **characterised in that** at least one snap-in pin (9) tapers in the direction of insertion and fixes the annular light-conducting element (4) in its circumferential direction by means of the sides forming the taper.

4. Headlamp according to one of claims 1 to 3, **characterised in that** the annular light-conducting element (4) adjoins a shoulder (17) of the cover element (3) and/or the lighting element (1 or 2) by means of its outer face.

5. Headlamp according to one of claims 1 to 4, **characterised in that** a plurality of fastening lugs (11) for fixing the holder to the cover element (3) and/or the lighting element (1 or 2) are moulded on to the rear of the cover element (3) and/or the lighting element (1 or 2).

6. Headlamp according to one of claims 1 to 5, **characterised in that** the opening (8) of the cover element (3) and/or the lighting element (1 or 2) for the light-coupling surface (5) and the light source (6) is arranged in the lower region of the annular light-conducting element (4) and is covered by a cap (12) as viewed from the front of the headlamp.

7. Headlamp according to claim 6, **characterised in that** the cap (12) is fastened to the light-conducting element (4).

8. Headlamp according to claim 7, **characterised in that** the cap (12) is held on the light-conducting element (4) by laser welds.

9. Headlamp according to one of claims 1 to 8, **characterised in that** the light source (6) is a light-emitting diode and the holder (7) is a cooling body for the light-emitting diode.

10. Headlamp according to claim 9, **characterised in that**, departing from the holder (7), the longitudinal axis (13) of the light source (6) extends forwards and upwards at an incline.

11. Headlamp according to one of claims 1 to 10, **characterised in that** the light-conducting element (4) bears by means of its rear face against protuberances of the cover element (3) arranged between the snap-in elements (10) in such a manner that it applies pretension thereto.

12. Headlamp according to one of claims 1 to 11, **characterised in that** the snap-in pins (9) are moulded on to the outer or inner rear edge region of the light-conducting elements (4) outside an optical reflection region of the light-conducting element (4).

## Revendications

1. Projecteur pour véhicules, comportant au moins un élément lumineux (1, 2) agencé à l'intérieur du projecteur, comportant un élément de recouvrement (3) qui, vu depuis la face avant du projecteur, entoure une ouverture de sortie de lumière de l'élément lumineux (1, 2), comportant un élément de guidage de lumière (4) de forme annulaire qui est agencé sur la face avant de l'élément de recouvrement (3), qui s'étend au voisinage de l'ouverture de sortie de lumière et qui présente une surface de couplage de lumière (5), et comportant une source lumineuse (6) associée à la surface de couplage de lumière (5),
**caractérisé en ce qu'**un support (7) pour la source lumineuse (6) est agencé sur la face postérieure de l'élément de recouvrement (3) et/ou de l'élément lumineux (1, 2), la source lumineuse (6) et la surface de couplage de lumière (5) de l'élément de guidage de lumière (4) sont associés à une ouverture (8) de l'élément de recouvrement (3) et/ou de l'élément lumineux (1 ou 2), et **en ce que** l'élément de recouvrement (3) et/ou l'élément lumineux (1 ou 2) est un élément de fixation pour la source lumineuse (6) et pour la surface de couplage de lumière (5) de l'élément de guidage de lumière (4), qui est voisine de la source lumineuse (6).

2. Projecteur selon la revendication 1, **caractérisé en ce que** sur la face postérieure de l'élément de guidage de lumière (4) de forme annulaire sont conformées plusieurs languettes d'enclenchement (9) qui s'engagent dans des éléments d'enclenchement (10) de l'élément de recouvrement (3) et/ou de l'élément lumineux (1 ou 2) et qui fixent l'élément de guidage de lumière (4) sur l'élément de recouvrement (3) et/ou sur l'élément lumineux (1 ou 2) en direction de pose et en direction périphérique.

3. Projecteur selon la revendication 2, **caractérisé en ce qu'**au moins une languette d'enclenchement (2) se rétrécit en direction de pose et fixe l'élément de guidage de lumière (4) dans sa direction périphérique avec les côtés formant le rétrécissement.

4. Projecteur selon l'une des revendications 1 à 3, **caractérisé en ce que** l'élément de guidage de lumière (4) de forme annulaire est adjacent par sa face extérieure à un épaulement (17) de l'élément de recouvrement (3) et/ou de l'élément lumineux (1 ou 2).

5. Projecteur selon l'une des revendications 1 à 4, **caractérisé en ce que** sur la face postérieure de l'élément de recouvrement (3) et/ou de l'élément lumineux (1 ou 2) sont conformés plusieurs tétons de fixation (11) pour fixer le support sur l'élément de recouvrement (3) et/ou sur l'élément lumineux (1 ou 2).

6. Projecteur selon l'une des revendications 1 à 5, **caractérisé en ce que** l'ouverture (8) associée pour la surface de couplage de lumière (5) et pour la source lumineuse (6), de l'élément de recouvrement (3) et/ou de l'élément lumineux (1 ou 2) est agencée dans la région inférieure de l'élément de guidage de lumière (4) annulaire et, vu depuis la face avant du projecteur, elle est recouverte par un capuchon (12).

7. Projecteur selon la revendication 6, **caractérisé en ce que** le capuchon (12) est fixé sur l'élément de guidage de lumière (4).

8. Projecteur selon la revendication 7, **caractérisé en ce que** le capuchon (12) est maintenu par des points de soudure au laser sur l'élément de guidage de lumière (4).

9. Projecteur selon l'une des revendications 1 à 8, **caractérisé en ce que** la source lumineuse (6) est une diode électroluminescente et le support (7) est un corps de refroidissement pour la diode électroluminescente.

10. Projecteur selon la revendication 9, **caractérisé en ce que** l'axe longitudinal (13) de la source lumineuse (6) s'étend en oblique vers l'avant et vers le haut en partant du support (7).

11. Projecteur selon l'une des revendications 1 à 10, **caractérisé en ce que** l'élément de guidage de lumière (4) est en appui avec sa face postérieure sous précontrainte sur des reliefs de l'élément de recouvrement (3) agencés entre les éléments d'enclenchement (10).

12. Projecteur selon l'une des revendications 1 à 11, **caractérisé en ce que** les languettes d'enclenchement (9) sont conformées sur la région de bord extérieure ou intérieure arrière des éléments de guidage de lumière (4) et en dehors d'une région de réflexion optique de l'élément de guidage de lumière (4).
